# EUROPEAN PATENT APPLICATION

(11) **EP 4 636 848 A1**
(43) Date of publication of application: **22.10.2025**
(21) Application number: 23903746.8
(22) Date of filing: 01.11.2023
(51) Int. Cl.: H01M 4/36, H01M 4/525, H01M 4/505, C01G 53/00, H01M 4/131, H01M 10/052, H01M 4/02

(54) **POSITIVE ELECTRODE ACTIVE MATERIAL FOR RECHARGEABLE LITHIUM BATTERY, METHOD OF PREPARING SAME, AND RECHARGEABLE LITHIUM BATTERY INCLUDING SAME**

(30) Priority: 16.12.2022 KR 20220177303
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR)
(72) Inventor: NAM, Sang Cheol, Seoul 02587 (KR); PARK, Jong Il, Pohang-si, Gyeongsangbuk-do 37680 (KR); SONG, Jung Hoon, Gwacheon-si, Gyeonggi-do 13835 (KR)
(74) Representative: Pfenning, Meinig & Partner mbB
(86) International application number: PCT/KR2023/017231
(87) International publication number: WO 2024/128543

(57) **Abstract**

The present embodiments relate to a positive electrode active material for a lithium secondary battery, a method for manufacturing the same, and a lithium secondary battery including the same. A positive electrode active material for a lithium secondary battery according to an embodiment includes a core portion, and a shell portion positioned on a surface of the core portion, wherein the shell portion includes acicular particles whose major axes are oriented in a direction from the core portion toward the shell portion, and the positive electrode active material is represented by the following chemical formula 1.

[Chemical Formula 1] Li_{1+q}(NiₓCo_{y}Mn_{z})_{1-w}(ZrₐNb_{b})_{w}O₂

In Chemical Formula 1, q, x, y, z, a, b, and w are 0≤q≤0.2, 0.0032<w<0.013, 0.7≤x<1.0, 0<y<0.3, 0<z<0.3, x+y+z=1, 0.2≤a≤0.7, 0.3≤b≤0.8, and a+b=1, respectively.

## Description

### [Technical Field]

The present embodiments relate to a positive electrode active material for a lithium secondary battery, a method for manufacturing the same, and a lithium secondary battery including the same.

### [Background Art]

With the recent demand for electric vehicles capable of traveling 600 km or more on a single charge, the development of high-capacity, high-energy-density secondary batteries for driving such vehicles is actively underway worldwide.

In order to manufacture excellent secondary batteries, positive electrode materials are important. In the case of layered NCM-based materials with increased nickel content for high capacity, performance improvements in terms of initial efficiency, life, output, resistance, and stability are required. One of methods for improving such performance is a technique using a concentration gradient-type positive electrode material in which a Ni concentration in a core portion is increased and a Ni concentration in a shell portion is decreased, thereby significantly improving stability of the shell portion that is in direct contact with an electrolyte.

However, in the above process, feeding tanks for a solution are connected in series to change the co-precipitation composition in real time during precursor manufacture, which leads to a long co-precipitation time, low productivity, and increased cost.

Therefore, there is a need for development of a positive electrode active material for a lithium secondary battery with improved secondary battery performance and a method for manufacturing the same through a simple process.

### [Disclosure]

### [Technical Problem]

An embodiment of the present invention attempts to provide a positive electrode active material for a lithium secondary battery having a structure in which lithium ions can be easily intercalated on a surface of a positive electrode material without using a concentration gradient-type structure of the related art, a method for manufacturing the same, and a lithium secondary battery including the same.

### [Technical Solution]

A positive electrode active material for a lithium secondary battery according to an embodiment of the present invention includes a core portion; and
a shell portion positioned on a surface of the core portion, wherein the shell portion includes acicular particles whose major axes are oriented in a direction from the core portion toward the shell portion, and the positive electrode active material is represented by Chemical Formula 1.

[Chemical Formula 1] Li_{1+q}(NiₓCo_{y}Mn_{z})_{1-w}(ZrₐNb_{b})_{w}O₂

In Chemical Formula 1, q, x, y, z, a, b, and w are 0≤q≤0.5, 0.0032<w<0.013, 0.7≤x<1.0, 0<y<0.3, 0<z<0.3, x+y+z=1, 0.2≤a≤0.7, 0.3≤b≤0.8, and a+b=1, respectively.

The acicular particles may have an aspect ratio in a range of 4 to 15, and a thickness of the shell portion may be in a range of 0.5 µm to 3 µm.

In a fully charged state of a lithium secondary battery including a positive electrode employing the positive electrode active material, the core portion may remain unchanged, and the shell portion may be converted into a comb-like structure in which a pore channel is formed in the direction from the core portion toward the shell portion.

Note that a boron (B) coating layer may be further included on the shell portion.

In addition, the positive electrode active material for a lithium secondary battery may further include rod-shaped primary particles positioned on a surface thereof, and the rod-shaped primary particles may have an average diameter in a range of 300 nm to 800 nm and an average width in a range of 50 nm to 200 nm.

In addition, the positive electrode active material for a lithium secondary battery may have an average particle size (D50) in a range of 10 µm to 16 µm.

A method for manufacturing a positive electrode active material for a lithium secondary battery according to another embodiment of the present invention may include: preparing a metal hydroxide including nickel, manganese, and cobalt; mixing the metal hydroxide with lithium hydroxide, a niobium (Nb) oxide, and a zirconium (Zr) oxide to obtain a mixture; and heat-treating the mixture to form a shell portion. In this case, a raw material of the niobium (Nb) oxide may include two or more different crystal structures, and may include Nb₂O₅ having a monoclinic crystal structure and Nb_{16.8}O₄₂ having an orthorhombic crystal structure. A molar ratio of Nb₂O₅ to Nb_{16.8}O₄₂ may be in a range of 2:1 to 4:1.

A molar ratio of niobium (Nb) in the niobium (Nb) oxide to zirconium (Zr) in the zirconium (Zr) oxide may be in a range of 0.5:1 to 4.5:1.

The heat-treating a mixture to form a shell portion may involve performing a first heat treatment in a temperature range of 400°C to 600°C for 1 to 5 hours, and performing a second heat treatment in a temperature range of 700°C to 800°C for 12 to 24 hours.

In the preparing a metal hydroxide including nickel, manganese and cobalt, the metal hydroxide having an average particle size (D50) in a range of 14 µm to 16 µm may be prepared.

In still another embodiment of the present invention, a positive electrode for a lithium secondary battery, including a current collector; and a positive electrode active material layer for a lithium secondary battery including the positive electrode active material positioned on at least one surface of the current collector may be provided, and a lithium secondary battery including the positive electrode for a lithium secondary battery may also be provided.

### [Advantageous Effects]

According to an embodiment of the present invention, a positive electrode active material for a lithium secondary battery with improved performance having a structure in which lithium ions can be easily intercalated on a surface of the positive electrode active material in a simple manner without using a concentration gradient-type structure.

### [Description of the Drawings]

FIG. 1 is a schematic diagram showing a method for manufacturing a positive electrode active material for a lithium secondary battery according to an embodiment of the present invention.
FIG. 2 shows a surface SEM image of a positive electrode active material for a lithium secondary battery according to Example 1.
FIG. 3 shows a surface SEM image of a positive electrode active material for a lithium secondary battery according to Comparative Example 1.
FIG. 4 shows a cross-sectional FIB image of the positive electrode active material for a lithium secondary battery according to Example 1.
FIG. 5 shows a cross-sectional FIB image of the positive electrode active material for a lithium secondary battery according to Comparative Example 1.
FIG. 6 shows a cross-sectional SEM image of the positive electrode active material in a discharged state after 300 charge/discharge cycles of a coin half-cell employing the positive electrode active material for a lithium secondary battery according to Example 1.
FIG. 7 shows a cross-sectional SEM image of the positive electrode active material in a discharged state after 300 charge/discharge cycles of a coin half-cell employing the positive electrode active material for a lithium secondary battery according to Comparative Example 1.
FIG. 8 shows cross-sectional SEM images of the electrode and positive electrode active material in a charged state after 300 charge/discharge cycles of the coin half-cell employing the positive electrode active material for a lithium secondary battery according to Example 1.
FIG. 9 shows cross-sectional SEM images of the electrode and positive electrode active material in a charged state after 300 charge/discharge cycles of the coin half-cell employing the positive electrode active material for a lithium secondary battery according to Comparative Example 1.

### [Mode for Invention]

In the description of the present invention, the terms such as first, second, and third are used to describe, but are not limited to, various parts, components, regions, layers, and/or sections. These terms are used only to discriminate one part, component, region, layer or section from another part, component, region, layer or section. Therefore, a first part, component, region, layer or section described below may be referred to as a second part, component, region, layer or section without departing from the scope of the present invention.

The technical terms used herein are set forth only to mention specific embodiments and are not intended to limit the present invention. Singular forms used herein are intended to include the plural forms as long as phrases do not clearly indicate an opposite meaning. In the present specification, the term "including (comprising)" is intended to embody specific characteristics, regions, integers, steps, operations, elements and/or components, but is not intended to exclude presence or addition of other characteristics, regions, integers, steps, operations, elements, and/or components.

Unless otherwise defined, all terms including technical and scientific terms used herein have the same meanings as the meanings generally understood by one skilled in the art to which the present invention pertains. Terms, such as those defined in commonly used dictionaries, are to be interpreted as having meanings consistent with the relevant technical literature and the present disclosure, and are not to be interpreted as having idealized or overly formal meanings unless expressly so defined herein.

Hereinafter, embodiments of the present invention will be described in detail. However, the embodiments are only provided by way of example, and the present invention is not limited thereto, but is only defined by the scope of the claims described later.

A positive electrode active material for a lithium secondary battery according to an embodiment of the present invention includes a core portion including nickel, manganese, and cobalt, and a shell portion positioned on a surface of the core portion, wherein the shell portion includes acicular particles positioned in a direction from the core portion toward the shell portion, and the acicular particles may form a radial arrangement with their major axes oriented in the direction from the core portion toward the shell portion.

The positive electrode active material for a lithium secondary battery according to an embodiment of the present invention may be represented by the following chemical formula 1.

[Chemical Formula 1] Li_{1+q}(NiₓCo_{y}Mn_{z})_{1-w}(ZrₐNb_{b})_{w}O₂

In Chemical Formula 1, q, x, y, z, a, b, and w are 0≤q≤0.2, 0.0032<w<0.013, 0.7≤x<1.0, 0<y<0.3, 0<z<0.3, x+y+z=1, 0.2≤a≤0.7, 0.3≤b≤0.8, and a+b=1, respectively.

When two first transition metal oxides having different crystal structures are mixed in the above ratio, the shell portion forms a comb-like structure in a fully charged state, in which a pore channel is formed to serve as a migration pathway that facilitates lithium intercalation and deintercalation, which is advantageous for improving the capacity and initial efficiency of the battery, lowering the initial resistance, and suppressing an occurrence of micro cracks in the positive electrode active material during charging and discharging to extend the life of a secondary battery.

Note that the acicular particles may be uniformly positioned radially from a center of the core portion toward a surface thereof, and may have an aspect ratio in a range of 2 to 30, and specifically in a range of 4 to 15. When the aspect ratio of the acicular primary particles falls within the specific range, the shell portion easily forms a comb-like structure when fully charged, which is advantageous for efficient intercalation and deintercalation of lithium ions. In the present invention, the aspect ratio may be calculated as a ratio of a major axis length to a minor axis length (length/width ratio) of the acicular primary particle. When the major axis represents a direction of a relatively long region of the primary particle, the minor axis represents a length of a relatively short region of the primary particle. In this case, the minor axis may be in a direction perpendicular to the major axis. The 'aspect ratio' of the primary particle may be calculated as a ratio of the major axis and minor axis of the primary particle measured from a cross-section of the primary particle. Specifically, in the acicular primary particle, the major axis length refers to the longest length in the acicular primary particle observed in a SEM image, and the minor axis length refers to the longest length among lengths perpendicular to the major axis length.

A thickness of the shell portion may be in a range of 0.5 µm to 3 µm, and specifically in a range of 0.5 µm to 2 µm.

Note that a nickel content in the core portion may be 70 mol% or more, and more specifically, 80 mol% or more, based on the total moles of nickel, manganese, and cobalt.

In an embodiment of the present invention, when a half-cell including a negative electrode using lithium metal and a positive electrode using the positive electrode active material is charged to 4.2 V at a constant current of 0.5 C, the core portion of the positive electrode active material may remain unchanged, and the shell portion may be converted into a comb-like structure in which a pore channel is formed. Specifically, the pore channel may be formed in a radial arrangement in a direction from a center of the core portion toward a surface thereof. This is advantageous for effective intercalation and deintercalation of lithium ions, reducing battery resistance, and improving battery performance.

Furthermore, a boron (B) coating layer may be further included on the shell portion. As long as the battery capacity, initial efficiency, resistance and life intended in the present invention are satisfied, a content of boron is not particularly limited.

Note that rod-shaped primary particles may be positioned on an outer surface of the positive electrode active material for a lithium secondary battery according to an embodiment of the present invention. The rod-shaped primary particles may have an average diameter in a range of 100 nm to 1000 nm, and specifically, in a range of 300 nm to 800 nm. Additionally, the rod-shaped primary particles may have an average width in a range of 10 nm to 300 nm, and specifically, in a range of 50 nm to 200 nm. In the present invention, the rod-shaped primary particle may be a particle observed on the surface of the positive electrode active material in a SEM image. The average diameter and average width of the rod-shaped primary particles may be average values of the diameters and widths of 20 to 50 primary particles observed in the SEM image. Note that the diameter of the rod-shaped primary particle refers to the longest length in the cross-section of the primary particle observed in the SEM image, and the width refers to the longest length perpendicular to the diameter.

Note that the positive electrode active material for a lithium secondary battery may have an average particle size (D50) in a range of 5 µm to 20 µm, and specifically, in a range of 10 µm to 16 µm. In the present invention, the average particle size of the positive electrode active material for a lithium secondary battery may be an average value of the sizes of 10 to 30 positive electrode active material particles observed in the SEM image. Note that the size of the positive electrode active material particle refers to the longest length in the cross-section observed in the SEM image.

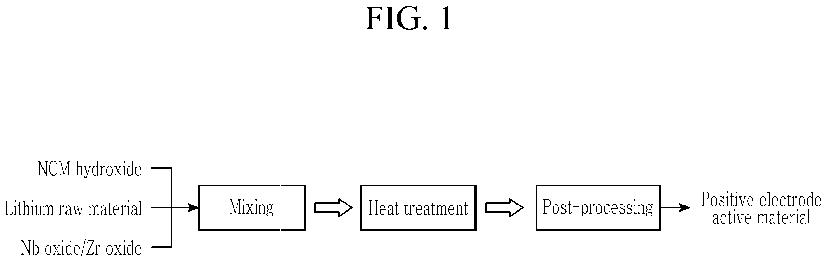

FIG. 1 schematically shows a method for manufacturing a positive electrode active material for a lithium secondary battery according to another embodiment of the present invention.

Referring to FIG. 1, a method for manufacturing a positive electrode active material for a lithium secondary battery according to another embodiment of the present invention may include the steps of preparing a metal hydroxide including nickel, manganese, and cobalt; mixing the metal hydroxide with a lithium hydroxide, a niobium (Nb) oxide, and a zirconium (Zr) oxide to obtain a mixture; and heat-treating the mixture to form a shell portion.

First, a metal hydroxide including nickel, manganese, and cobalt is prepared.

In the present embodiment, a metal salt aqueous solution including a nickel raw material, a manganese raw material, a cobalt raw material, and water is prepared, and then the metal salt aqueous solution is supplied to a co-precipitation reactor to obtain a metal hydroxide according to a method for manufacturing a positive electrode active material precursor generally known in the art. Note that an average particle size (D50) of the positive electrode active material precursor may be 10 µm or more, and specifically, in a range of 14 µm to 16 µm. When the particle size of the precursor falls within the specific range, an advantage in that a positive electrode active material with improved performance can be manufactured is obtained, such as sufficient and effective formation of a shell portion composed of rod-shaped primary particles on a surface of the precursor, and minimization of pores during electrode plate manufacture through blending with small-diameter particles.

Next, a step of mixing the metal hydroxide with a lithium hydroxide, a niobium (Nb) oxide, and a zirconium (Zr) oxide to obtain a mixture may be performed.

The niobium (Nb) oxide may include a monoclinic crystal structure and an orthorhombic crystal structure. Specifically, the niobium (Nb) oxide may include Nb₂O₅ having a monoclinic crystal structure and Nb_{16.8}O₄₂ having an orthorhombic crystal structure, and Nb₂O₅ may be mixed in a molar ratio ranging from 2:1 to 4:1 with respect to Nb_{16.8}O₄₂.

Additionally, niobium (Nb) in the niobium (Nb) oxide to zirconium (Zr) in the zirconium (Zr) oxide may be mixed in a molar ratio ranging from 0.5:1 to 4.5:1.

Next, a step of heat-treating the mixture to form a shell portion may be performed.

The heat treatment step may specifically involve performing a first heat treatment at a temperature range of 400°C to 600°C for 1 to 5 hours, and performing a second heat treatment at a temperature range of 700°C to 800°C for 10 to 20 hours. In this case, a heating rate for increasing the temperature to the heat treatment temperature may be in a range of 1°C/min to 10°C/min, and specifically, in a range of 3°C/min to 7°C/min. This is advantageous for uniformly forming a shell portion by uniformly mixing transition metal oxides having different crystal structures.

Note that the step of heat treating the mixture to form a shell portion may be performed in an atmosphere where oxygen is continuously supplied. The oxygen may be supplied at a flow rate in a range of 100 mL/min to 500 mL/min, and specifically, in a range of 100 mL/min to 300 mL/min.

A positive electrode active material obtained through the heat treatment may be subjected to post-processing processes such as cooling, pulverization, and classification. In addition, after washing and drying, a boron (B) coating layer may additionally be formed by dry mixing and heat treating H₃BO₃ (Aldrich).

Another embodiment may provide a positive electrode including a current collector and a positive electrode active material layer positioned on one surface of the current collector and including a positive electrode active material manufactured according to the embodiment described above.

The characteristics of the positive electrode active material constituting the positive electrode active material layer are as described above. Therefore, a detailed description of the positive electrode active material will be omitted.

The positive electrode active material layer may include a binder and a conductive material.

The binder may serve to improve the adhesion between positive electrode active material particles and the adhesive strength between the positive electrode active material and the positive electrode current collector, and the type of binder is not particularly limited as long as it is a binder used for manufacturing a positive electrode for a lithium secondary battery, and one or more types of binders may be used. The binder may be included in an amount of 1 to 30 wt% based on the total weight of the positive electrode active material layer.

The conductive material is used to impart conductivity to the electrode, and the type thereof is not particularly limited as long as it has electronic conductivity without causing a chemical change in a battery to be configured. The conductive material may typically be included in an amount of 1 to 30 wt% based on the total weight of the positive electrode active material layer.

The positive electrode may be manufactured according to a positive electrode manufacturing method of the related art, except that the above-described positive electrode active material is used.

Still another embodiment provides a lithium secondary battery including the positive electrode.

The lithium secondary battery may specifically include a positive electrode, a negative electrode positioned opposite the positive electrode, a separator interposed between the positive electrode and the negative electrode, and an electrolyte, in which the positive electrode is as described above. **In** addition, the lithium secondary battery may optionally further include a battery container that accommodates an electrode assembly including the positive electrode, the negative electrode, and the separator, and a sealing member that seals the battery container.

The lithium secondary battery may be manufactured according to a method for manufacturing a lithium secondary battery of the related art, except that the above-described positive electrode active material is used, and is not particularly limited.

### DETAILED DESCRIPTION OF THE EMBODIMENTS

Hereinafter, Examples of the present invention will be described in detail. However, the Examples are only provided by way of example, and the present invention is not limited thereto, but is only defined by the scope of the claims described later.

### (Preparation of Metal Hydroxide Including Nickel, Manganese, and Cobalt)

A metal hydroxide including nickel, manganese, and cobalt was prepared using a general co-precipitation method. Specifically, after NiSO₄·6H₂O, CoSO₄·7H₂O, and MnSO₄·H₂O were dissolved in DI water to prepare a 2.5 M metal salt solution, N₂ gas was purged to prevent oxidation of metal ions during the co-precipitation reaction, and the temperature inside the reactor was maintained at 50°C. The metal salt aqueous solution and NH₄OH, which is used as a co-precipitation chelating agent, were introduced into the co-precipitation reactor (100 L), and NaOH was added to adjust the pH of the mixed solution in the reactor. After carrying out particle growth such that the average particle diameter (D50) of the finally produced metal hydroxide precursor becomes 14 µm, the finally produced metal hydroxide precursor was filtered and separated, washed with DI water, and dried in an oven at 100°C for 24 hours. Finally, a al hydroxide precursor having a composition of (Ni_{0.88}CO_{0.10}Mn_{0.02})(OH)₂ was obtained.

### (Example 1: Preparation of Positive Electrode Active Material)

Based on 1 mol of the prepared metal hydroxide precursor, 1.05 mol of LiOH·H₂O (Samchun Chemical Co., Ltd., battery grade) was mixed, ZrO₂ (Aldrich, 4N) was mixed so that the amount of Zr became 0.0022 mol, and a niobium oxide, in which Nb₂O₅ having a monoclinic structure and Nb_{16.8}O₄₂ having an orthorhombic structure were mixed in a weight ratio of 76:24, was mixed such that the amount of Nb became 0.005 mol. The resulting mixture was charged into a tube furnace (inner diameter: 50 mm, length: 1,000 mm) and calcined while supplying oxygen at a flow rate of 200 mL/min. Specifically, the calcination was performed by heating to 480°C at a heating rate of 5°C/min, maintaining the temperature at 480°C for 5 hours, subsequently heating again to 740 to 780°C at a heating rate of 5°C/min, and maintaining the temperature within the above range for 16 hours. Next, the calcined material was cooled to room temperature, pulverized, and classified to prepare a Zr- and Nb-doped NCM positive electrode active material.

100 g of the prepared positive electrode active material was added to 100 g of DI water, which was then stirred for 10 minutes and filtered to recover the positive electrode active material. The recovered positive electrode active material was dried in a chamber at 100°C or higher and dry-mixed with H₃BO₃ (Aldrich), which was then heat treated at a temperature of 300 to 350°C for 5 hours in an air atmosphere to prepare a final positive electrode active material.

### (Example 2 to 4 and Comparative Examples 1 and 2: Preparation of Positive Electrode Active Material)

The positive electrode active materials were prepared in the same manner as in Example 1, except that the niobium oxide, in which Nb₂O₅ having a monoclinic structure and Nb_{16.8}O₄₂ having an orthorhombic structure were mixed in a weight ratio of 76:24, was mixed such that the amount of NbO was finally adjusted as shown in Table 1 below.

**(Table 1)**

| | (Ni_{0.88}Co_{0.10}Mn_{0.02})(OH)₂ | LiOH | ZrO₂ | NbO |
|---|---|---|---|---|
| | (mol) | (mol) | (mol) | (mol) |
| Example 1 | 1 | 1.05 | 0.0022 | 0.005 |
| Example 2 | 1 | 1.05 | 0.0022 | 0.007 |
| Example 3 | 1 | 1.05 | 0.0022 | 0.009 |
| Example 4 | 1 | 1.05 | 0.0022 | 0.003 |
| Comparative Example 1 | 1 | 1.05 | 0.0022 | 0 |
| Comparative Example 2 | 1 | 1.05 | 0.0022 | 0.001 |
| Comparative Example 3 | 1 | 1.05 | 0.0022 | 0.011 |
| Comparative Example 4 | 1 | 1 | 0 | 0.005 |

### (Characteristic Analysis 1 - SEM Analysis)

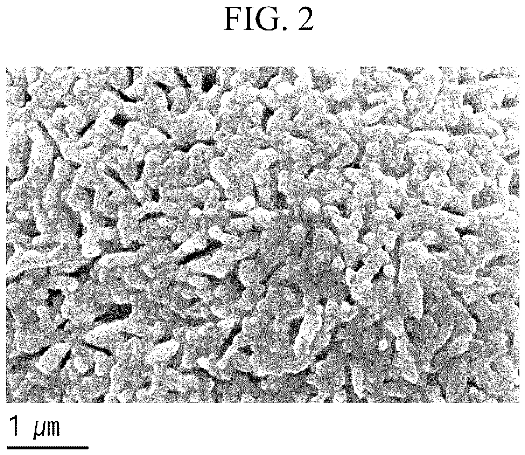

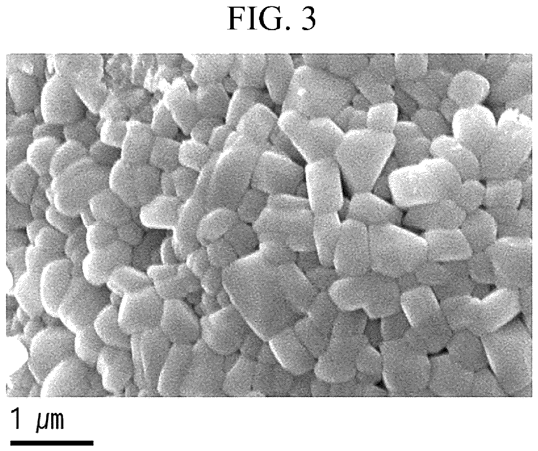

Surface SEM analysis of the positive electrode active materials prepared according to Example 1 and Comparative Example 1 was performed, and the results are shown in FIGS. 2 and 3.

Referring to FIG. 2, it can be confirmed that long rod-shaped primary particles are formed on the surface of the positive electrode active material prepared according to Example 1, and the primary particles have a width in a range of about 50 to 200 nm and a length in a range of 300 to 800 nm.

Referring to FIG. 3, it can be confirmed that angular particles were formed on the surface of the positive electrode active material manufactured according to Comparative Example 1, and specifically, square or rectangular primary particles are formed. The primary particles were confirmed to have a horizontal width of about 200 nm to 600 nm and a vertical length in a range of about 200 nm to 600 nm.

### (Characteristic Analysis 2 - FIB Analysis)

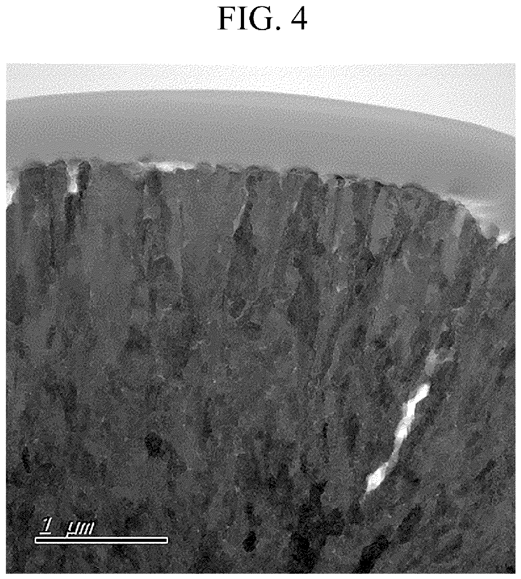

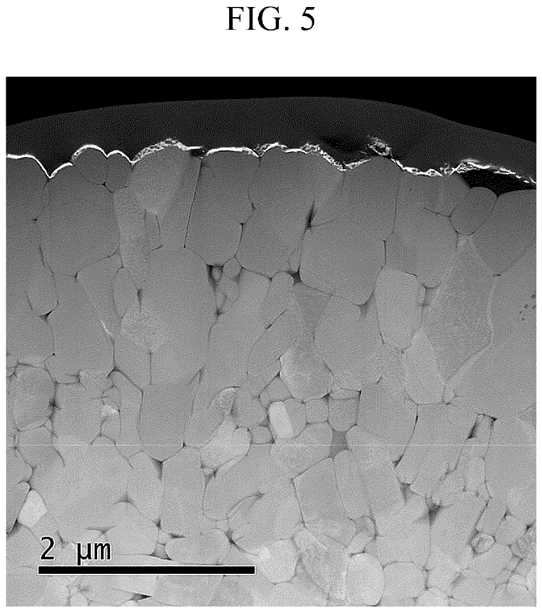

Cross-sectional FIB analysis of the positive electrode active materials manufactured according to Example 1 and Comparative Example 1 was performed, and the results are shown in FIGS. 4 and 5.

Referring to FIG. 4, it can be confirmed that the positive electrode active material prepared according to Example 1 has acicular particles uniformly positioned in a region with a thickness of about 1 µm in a direction from the surface toward the core portion. In addition, it can be confirmed that the major axes of the acicular particles are oriented in a radial arrangement in the direction from the center of the core portion toward the surface. It can be confirmed that the acicular particles have a length in a range of about 0.8 µm to about 1.0 µm and a width in a range of about 80 nm to 200 nm.

Referring to Fig. 5, it can be confirmed that quadrangular particles having a square or rectangular shape are formed in the cross-section of the positive electrode active material prepared according to Comparative Example 1. In addition, the quadrangular particles were confirmed to have a horizontal width of about 200 nm to 600 nm and a vertical length in a range of about 200 nm to 600 nm.

### ((Preparation of Coin-Type Half-Cell)

CR2032 coin cells were prepared using the positive electrode active materials prepared according to the Examples and Comparative Examples, and then subjected to electrochemical evaluation. The results are summarized in Table 2 below.

Specifically, a slurry for preparing an electrode plate was prepared by mixing a positive electrode active material, a conductive material (Denka black), and a binder (PVDF, KF1100) in a weight ratio of 92.5:3.5:4, and adding NMP (N-Methyl-2-pyrrolidone) to adjust the slurry viscosity such that the solid content was about 30%. The prepared slurry was coated on a 15 µm-thick Al foil using a doctor blade, dried, followed by drying and rolling. The electrode loading amount was about 14 mg/cm², and the rolling density was about 3.4 g/cm³. As the electrolyte solution, 1M LiPF₆ was dissolved in a mixed solvent of EC:DMC:EMC=3:4:3 (vol%), and then 1.5 wt% of vinylene carbonate (VC) was added. After preparing a coin-type half-cell using a PP separator and a lithium negative electrode (200 µm, Honzo metal), it was aged at room temperature for 10 hours.

A charge/discharge test was conducted using the prepared coin-type half-cell.

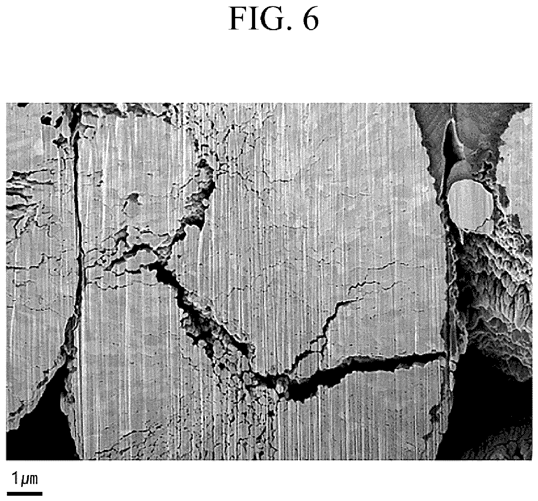

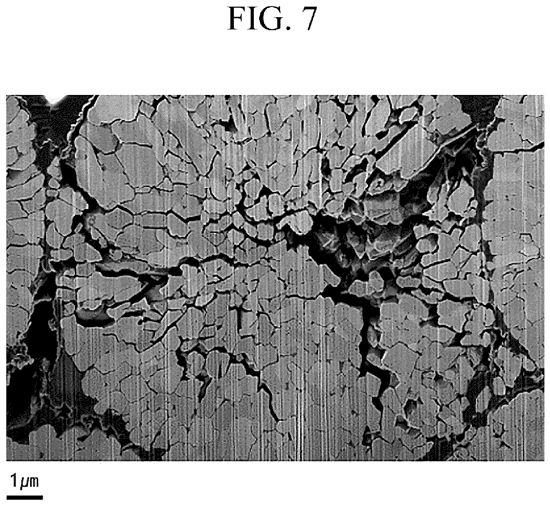

FIG. 6 shows a cross-sectional SEM image of the positive electrode active material in a discharged state after 300 charge/discharge cycles of a coin half-cell employing the positive electrode active material for a lithium secondary battery according to Example 1, and FIG. 7 shows a cross-sectional SEM image of the positive electrode active material in a discharged state after 300 charge/discharge cycles of a coin half-cell employing the positive electrode active material for a lithium secondary battery according to Comparative Example 1.

Referring to FIG. 6, in the case of the coin half-cell employing the positive electrode active material for a lithium secondary battery according to Example 1, it was observed that, in the cross-section of the positive electrode active material in a discharged state after 300 charge/discharge cycles, almost no microcracks were found in the positive electrode active material itself, except for cracks that appeared to have occurred during the initial electrode preparation process.

On the other hand, referring to FIG. 7, in the case of the coin half-cell employing the positive electrode active material for a lithium secondary battery according to Comparative Example 1, it can be confirmed that severe cracking occurred in the positive electrode active material particles in the discharged state after 300 charge/discharge cycles.

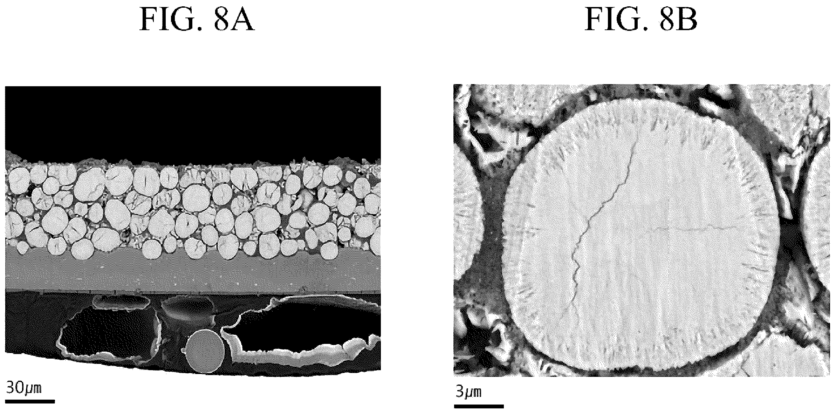

FIG. 8 shows cross-sectional SEM images of the positive electrode and positive electrode active material in a charged state after 300 charge/discharge cycles of the coin half-cell employing the positive electrode active material for a lithium secondary battery according to Example 1.

Specifically, FIG. 8(a) shows a cross-sectional SEM image of a positive electrode in a charged state after 300 charge/discharge cycles of the coin half-cell employing the positive electrode active material for a lithium secondary battery according to Example 1, and FIG. 8(b) shows a cross-sectional SEM image of the positive electrode active material.

Referring to FIG. 8, it can be confirmed that the positive electrode active material for a lithium secondary battery according to Example 1 does not significantly exhibit cracking even in a fully charged state in which significant volume expansion occurs after charging and discharging. In addition, it can be confirmed that, in the fully charged state, the core of the positive electrode active material maintains its shape, whereas the shell portion forms a comb-like structure when lithium ions have been deintercalated. It is believed that the core portion maintaining its shape strongly holds the shell portion that has transformed into a comb-like structure, thereby suppressing the occurrence of micro cracks. Therefore, it is believed that a reduction in battery life caused by the occurrence of micro cracks can be prevented.

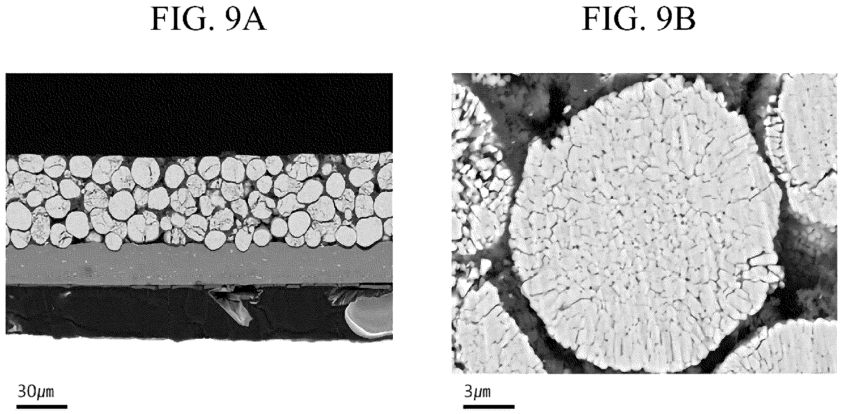

FIG. 9 shows cross-sectional SEM images of the electrode and positive electrode active material in a charged state after 300 charge/discharge cycles of the coin half-cell employing the positive electrode active material for a lithium secondary battery according to Comparative Example 1.

Referring to FIG. 9, it can be confirmed that the positive electrode active material for a lithium secondary battery according to Comparative Example 1 exhibits severe cracking in the electrode in a fully charged state, in which significant volume expansion occurs after charging and discharging, and the primary particles of the positive electrode active material are widely separated from each other, resulting in low strength.

The results of charge/discharge tests of the coin half cells employing the positive electrode active materials according to Examples 1 to 4 and Comparative Examples 1 to 3 are summarized in Table 2 below.

**(Table 2)**

| | Charge capacity (mAh/g) | Discharge capacity (mAh/g) | Initial efficiency (%) | Initial resistance (ohm) | Resistance increase rate (%) | 2C discharge/ 0.5C charge (%) | Room temperature life retention rate (%) @30 times (25°C) | High-temperature Diffusion rate (%) times (45°C) | Diffusion coefficient @4.2V, 30 times (cm²/s) | Exchange current density @SOC50%, 30 times (A/cm²) |
|---|---|---|---|---|---|---|---|---|---|---|
| Example 1 | 235.7 | 224.4 | 95.2 | 25.3 | 87.5 | 86.2 | 99.2 | 98.3 | 1.77x10⁻⁹ | 2.03x10⁻² |
| Example 2 | 235.3 | 224.7 | 95.5 | 25.2 | 85.5 | 86.1 | 99.1 | 98.1 | 1.72x10⁻⁹ | 1.88x10⁻² |
| Example 3 | 234.6 | 222.4 | 94.8 | 25.5 | 88.2 | 86.4 | 99.0 | 98.2 | 1.78x10⁻⁹ | 1.92x10⁻² |
| Example 4 | 235.4 | 224.3 | 95.3 | 25.4 | 86.2 | 86.1 | 98.9 | 97.8 | 1.72x10⁻⁹ | 2.01x10⁻² |
| Comparative Example 1 | 233.2 | 212.9 | 90.3 | 30.2 | 130 | 82.1 | 95.3 | 93.4 | 6.17x10⁻¹⁰ | 9.96x10⁻³ |
| Comparative Example 2 | 233.7 | 215.9 | 92.4 | 28.2 | 95.1 | 83.5 | 96.3 | 93.3 | 3.81x10⁻⁹ | 9.98x10⁻³ |
| Comparative Example 3 | 232.1 | 210.1 | 90.5 | 32.1 | 145.2 | 82.3 | 94.4 | 89.2 | 5.28x10⁻¹⁰ | 9.94x10⁻³ |
| Comparative Example 4 | 235.4 | 225.3 | 95.7 | 25.1 | 98.3 | 86.1 | 97.2 | 96.3 | 1.22x10⁻⁹ | 1.23x10⁻² |

Referring to Table 2, it can be confirmed that the coin-type half-cells employing the positive electrode active materials according to Examples 1 to 4 exhibit high initial charge/discharge capacity and initial efficiency, and have excellent life characteristics.

From this, it is determined that the positive electrode active material prepared according to the embodiment of the present invention has improved battery life and cycle characteristics by reducing the occurrence of micro cracks during charging and discharging.

It will be understood by one skilled in the art to which the present invention belongs that the present invention is not limited to the above embodiments, but can be manufactured in a variety of different forms, and can be implemented in other specific forms without changing the technical spirit or essential features of the present invention.

Therefore, the embodiments described above should be understood as illustrative in all respects and not for purposes of limitation.

## Claims

1. A positive electrode active material for a lithium secondary battery comprising:
a core portion; and
a shell portion positioned on a surface of the core portion, wherein
the shell portion comprises acicular particles whose major axes are oriented in a direction from the core portion toward the shell portion, and
the positive electrode active material is represented by Chemical Formula 1,
[Chemical Formula 1] Li_{1+q}(NiₓCo_{y}Mn_{z})_{1-w}(ZrₐNb_{b})_{w}O₂
in Chemical Formula 1, q, x, y, z, a, b, and w are 0≤q≤0.5, 0.0032<w<0.013, 0.7≤x<1.0, 0<y<0.3, 0<z<0.3, x+y+z=1, 0.2≤a≤0.7, 0.3≤b≤0.8, and a+b=1, respectively.

2. The positive electrode active material of claim 1, wherein:
the acicular particles have an aspect ratio in a range of 4 to 15.

3. The positive electrode active material of claim 1, wherein:
a thickness of the shell portion is in a range of 0.5 µm to 3 µm.

4. The positive electrode active material of claim 1, wherein:
in a fully charged state of a lithium secondary battery employing the positive electrode active material,
the core portion remains unchanged, and
the shell portion is converted into a comb-like structure in which a pore channel is formed in the direction from the core portion toward the shell portion.

5. The positive electrode active material of claim 1, further comprising
a boron (B) coating layer on the shell portion.

6. The positive electrode active material of claim 5, further comprising
the lithium rechargeable battery 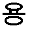 positive electrode active material 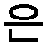 ,
rod-shaped primary particles positioned on a surface of the positive electrode active material for a lithium secondary battery.

7. The positive electrode active material of claim 6, wherein:
the rod-shaped primary particles have an average diameter in a range of 300 nm to 800 nm and an average width in a range of 50 nm to 200 nm.

8. The positive electrode active material of claim 1, wherein:
the positive electrode active material for a lithium secondary battery has an average particle size (D50) in a range of 10 µm to 16 µm.

9. A method for manufacturing a positive electrode active material for a lithium secondary battery, the method comprising:
preparing a metal hydroxide comprising nickel, manganese, and cobalt;
mixing the metal hydroxide with lithium hydroxide, a niobium (Nb) oxide, and a zirconium (Zr) oxide to obtain a mixture; and
heat-treating the mixture to form a shell portion, wherein
a raw material of the niobium (Nb) oxide comprises two or more different crystal structures.

10. The method of claim 9, wherein:
the niobium (Nb) oxide comprises Nb₂O₅ having a monoclinic crystal structure and Nb_{16.8}O₄₂ having an orthorhombic crystal structure.

11. The method of claim 10, wherein:
a molar ratio of Nb2O5 to Nb16.8O42 is in a range of 2:1 to 4:1.

12. The method of claim 9, wherein:
a molar ratio of niobium (Nb) in the niobium (Nb) oxide to zirconium (Zr) in the zirconium (Zr) oxide is in a range of 0.5:1 to 4.5:1.

13. The method of claim 9, wherein:
the heat-treating a mixture to form a shell portion involves
performing a first heat treatment in a temperature range of 400°C to 600°C for 1 to 5 hours, and
performing a second heat treatment in a temperature range of 700°C to 800°C for 12 to 24 hours.

14. The method of claim 9, wherein:
in the preparing a metal hydroxide comprising nickel, manganese and cobalt,
the metal hydroxide having an average particle size (D50) in a range of 14 µm to 16 µm is prepared.

15. A positive electrode for a lithium secondary battery, comprising:
a current collector; and
a positive electrode active material layer for a lithium secondary battery comprising the positive electrode active material of any one of claims 1 to 8 positioned on at least one surface of the current collector.

16. A lithium secondary battery comprising the positive electrode for a lithium secondary battery of claim 15.
